# EUROPÄISCHE PATENTSCHRIFT

(11) **EP 2 635 424 B1**
(45) Veröffentlichungstag und Bekanntmachung des Hinweises auf die Patenterteilung: **29.04.2020**
(21) Anmeldenummer: 11781479.8
(22) Anmeldetag: 28.10.2011
(51) Int. Cl.: B29C 44/38, B29C 44/60

(54) **VERFAHREN ZUR HERSTELLUNG VON GESCHÄUMTEN FORMKÖRPERN**
METHOD FOR PRODUCING FOAMED MOLDINGS
PROCÉDÉ DE FABRICATION DE CORPS MOULÉS EXPANSÉS

(30) Priorität: 03.11.2010 DE 102010043329
(43) Veröffentlichungstag der Anmeldung: 11.09.2013
(73) Patentinhaber: Covestro Deutschland AG, 51373 Leverkusen (DE)
(72) Erfinder: WIRTZ, Hans-Guido, 51377 Leverkusen (DE); GRIMBERG, Frank, 41541 Dormagen (DE); ALBERS, Reinhard, 51375 Leverkusen (DE); PIELASCH, Andreas, 51427 Bergisch Gladbach (DE)
(74) Vertreter: Levpat
(86) Internationale Anmeldenummer: PCT/EP2011/069052
(87) Internationale Veröffentlichungsnummer: WO 2012/059438

(56) Entgegenhaltungen:
- EP-A2- 2 023 025
- EP-A2- 2 148 156
- WO-A1-91/10551
- DE-A1- 19 728 648
- JP-A- 9 109 171
- US-A- 4 240 999

## Beschreibung

Die vorliegende Erfindung betrifft ein Verfahren zur Herstellung von geschäumten Formkörpern, umfassend die Schritte des Bereitstellens einer Form und des Einbringens eines schaumbildenden Reaktionsgemisches in die Form.

Derzeit werden mit Polyurethanschäumen zu dämmende Hohlräume entweder kontinuierlich, wie es für Metallpaneele oder Isolationsplatten der Fall ist, oder diskontinuierlich, beispielsweise bei Kühlgeräten, Rohren oder diskontinuierlichen Paneelen, gedämmt. Bei solchen Verfahren werden konstante Austragsmengen des Dämmungsmaterials verwendet, die je nach Anwendungsfall in bestimmten Grenzenliegen müssen, um den Polyurethanschaum-Strukturen, Reaktivitätsprofilen sowie Vermischungsanforderungen gerecht zu werden.

Ein Beispiel für ein konventionelles Verfahren zur Herstellung von Isolierungen für Kühlgeräte ist die Befüllung in Wannenlage, bei der das Gerät auf der Rückwand liegend entweder von der Kompressorstufe oder dem Top-Bereich befüllt wird. Ein weiteres Beispiel für ein weiterentwickeltes konventionelles Verfahren ist das "Top Flow"-Verfahren, bei dem in einer Form das Reaktionsgemisch von unten kommend eingetragen wird und sich so auf dem Boden der Form ausbreiten kann.

Bei einer konstanten Injektionsmenge pro Zeiteinheit wird das zum Polyurethanschaum reagierende Gemisch in einem vergleichsweise begrenzten Bereich aufgetragen. Dieses hat jedoch gerade bei komplexen Geometrien des auszuschäumenden Hohlraums den Nachteil, dass eine ungünstigere Vorverteilung des Reaktionsgemisches vorliegt.

DE 10 2008 040 598 A1 offenbart ein Verfahren zum Ausschäumen eines Hohlkörpers, insbesondere eines Haushaltskältegerätegehäuses, mit den Schritten des Platzierens einer Einspritzdüse an einer Einlassöffnung des Hohlkörpers, Einspritzen eines Schaumbildners in den Hohlkörper mit Hilfe der Einspritzdüse und Expandierenlassen des eingespritzten Schaumbildners. Hierbei wird die Flugweite des Schaumbildners von der Einspritzdüse bis zu einem Auftreffpunkt an einer Innenwand des Hohlkörpers während des Einspritzvorgangs reduziert.

Eine Möglichkeit, um die Flugweite des Schaumbildners zu variieren, ist das Verstellen der Spritzrichtung der Einspritzdüse während des Einspritzvorgangs. Bevorzugt ist gemäß DE 10 2008 040 598 A1 allerdings, die Flugweite des Schaumbildners zu reduzieren, indem dessen Austrittsgeschwindigkeit an der Einspritzdüse und damit die Strahlenergie für das Schaummaterial reduziert wird. Dieses sei durch eine hinsichtlich ihres Öffnungsquerschnitts veränderbare Düse zu erreichen. Nachteilig an dieser Vorgehensweise ist jedoch, dass eine spezielle Düse benötigt wird. Hierdurch werden an bestehenden Anlagen Umrüstkosten und Stillstandszeiten erzeugt.

Die vorliegende Erfindung hat sich daher die Aufgabe gestellt, ein Verfahren zur Herstellung von geschäumten Formkörpern bereitzustellen, bei dem die zuvor genannten Nachteile im Stand der Technik überwunden werden. Sie hat sich insbesondere die Aufgabe gestellt, solch ein Verfahren bereitzustellen, bei dem in auszuschäumenden Hohlkörpern eine homogenere Schaumdichteverteilung auftritt und welches mit Einspritzdüsen durchgeführt werden kann, welche hinsichtlich ihres Öffnungsquerschnittes nicht veränderbar sein müssen.

Die Aufgabe wird erfindungsgemäß gelöst durch ein Verfahren zur Herstellung von geschäumten Formkörpern, umfassend die Schritte:
A) Bereitstellen einer Form und
B) Einbringen eines schaumbildenden Reaktionsgemisches in die Form,
welches sich dadurch auszeichnet, dass in Schritt B) das schaumbildende Reaktionsgemisch unter konstantem Injektionsdruck und zeitlich veränderlicher Menge in die Form eingebracht wird,
wobei das schaumbildende Reaktionsgemisch aus der Reaktion einer ersten und einer zweiten Reaktionskomponente erhalten wird und die erste und zweite Reaktionskomponente jeweils mittels Gleichdruckdüsen (1) in eine vergleichsweise kleine im Mischkopf liegende Mischkammer (2) eingebracht werden und
wobei die zeitliche Änderung der Eintragsmenge des schaumbildenden Reaktionsgemisches durch eine Veränderung der Leistung eines auf das Reaktionsgemisch einwirkenden Pumpenmotors erfolgt und
wobei das schaumbildende Reaktionsgemisch aus der Vermischung der ersten und der zweiten Reaktionskomponente in der im Mischkopf ligenden Mischkammer erhalten wird und die im Mischkopf ligende Mischkammer eine oder mehrere Gleichdruckdüsen (1) umfasst, und
wobei der konstant gehaltene Druck im Verfahren der an den Gleichdruckdüsen (1) angelegte Druck ist.

Das erfindungsgemäße Verfahren eignet sich insbesondere für Hohlkörper, deren Geometrie besondere Anforderungen an das Fließverhalten der Reaktionssysteme stellt. Insbesondere gehören hierzu gestreckte Geometrien, Geometrien mit hohen Schlankheitsgraden, mit dünnen und engen Hohlkörperkammern sowie langen Distanzen vom Eintragsort des Reaktionsgemisches bis zum Fließwegende des auszufüllenden Hohlkörpers.

Die in Schritt (A) des erfindungsgemäßen Verfahrens bereitgestellte Form kann eine geschlossene oder eine offene Form aufweisen. "Offen" bedeutet hierbei, dass mindestens zwei Seitenwände vorhanden sind. Der erhaltene Schaum kann aus der Form entnommen werden oder für seine Endbestimmung in der Form verbleiben. Erfindungsgemäß besonders geeignet ist eine Form, mit der einstückige Isolierungen von Kühlgeräten hergestellt werden. Vorzugsweise wird die Form so angeordnet, dass in sie eingebrachtes Reaktionsgemisch sich auf ihrem Boden verteilen kann.

Das schaumbildende Reaktionsgemisch kann in Schritt (B) mittels einer üblichen, bei Modifizierung mittels Gleichdruckdüse und gegebenenfalls dynamischer Drossel modifizierter, Hochdruck-Mischanlage hergestellt und mittels eines Austragsrohres in die Form eingebracht werden. Es können pro Form ein Austragsrohr oder aber auch mehrere Austragsrohre eingesetzt werden. Nach beendeter Schaumbildung härtet das Reaktionsgemisch aus.

Weiterhin wird im erfindungsgemäßen Verfahren das schaumbildende Reaktionsgemisch unter konstantem Injektionsdruck in die Form eingebracht. Der Begriff "konstant" schließt hierbei technisch unvermeidliche Schwankungen mit ein. Insbesondere sind Schwankungen von ± 15% um einen Mittelwert mit eingeschlossen. Vorteilhaft an einem konstanten Injektionsdruck ist, dass gerade bei exothermen Reaktionen eine gute Vermischung des Reaktionsgemisches erfolgen kann. Die durch den konstanten Druck auch konstante Energiezufuhr in das Reaktionssystem beeinflusst dabei in günstiger Weise die Reaktionskinetik und somit auch die Vermischungsqualität.

Das schaumbildende Reaktionsgemisch wird aus der Vermischung mehrerer Komponenten in einem Mischkopf erhalten und unmittelbar danach in die Form eingebracht. Hierbei kann die Austrittsöffnung des Mischkopfs gleichzeitig das Austragsrohr darstellen, mit dem die Mischung in die Form eingebracht wird.

Der Mischkopf umfasst eine oder mehrere Injektionsdüsen, wobei der konstant gehaltene Druck im erfindungsgemäßen Verfahren der an den Injektionsdüsen anliegende Druck ist.

Die Vermischung von flüssigen Reaktionskomponenten erfolgt bei der Polyurethan-Verarbeitung in einem Mischkopf, wobei zwischen Hochdruck- und Niederdruckvermischung unterschieden werden kann. Beim Hochdruckmischverfahren, welches für das beschriebene Verfahren bevorzugt zur Anwendung kommt, wird die mittels Pumpen erzeugte Druckenergie der Reaktionskomponenten über Düsen in kinetische Energie umwandelt. Durch Eindüsen der Komponenten in eine vergleichsweise kleine im Mischkopf liegende Mischkammer wird die kinetische Energie räumlich konzentriert und zur Vermischung der Reaktionskomponenten genutzt. Übliche Injektionsdrücke liegen zwischen 120 und 170 bar, wodurch je nach Materialdichte Strömungsgeschwindigkeiten von ca. 140 bis 180 m/s realisiert werden.

Der mit der Veränderung der Austragmenge pro Zeiteinheit einhergehenden Druckänderung kann mittels Gleichdruckdüsen begegnet werden. Beispiele für geeignete Düsen sind federbelastete Gleichdruckdüsen, pneumatische (Gasfeder) oder hydraulisch geregelte Gleichdruckdüsen.

Dass das schaumbildende Reaktionsgemisch in zeitlich veränderlicher Menge in die Form eingebracht wird, bedeutet, dass der Massenfluss der Reaktionsmischung in die Form, welcher beispielsweise in Gramm pro Sekunde ausgedrückt werden kann, variabel ist. Die zeitliche Veränderung kann linear sein oder aber auch anderen Zeitgesetzen folgen.

Der Eintrag des Reaktionsgemisches in die Form wird durch die Leistung eines auf das Reaktionsgemisch einwirkenden Pumpenmotors gesteuert. Mit eingeschlossen ist selbstverständlich der Fall, dass bei mehreren zu fördernden Komponenten des schaumbildenden Reaktionsgemisches mehrere Motoren beeinflusst werden. Das Eintragsprofil kann für jede Form individuell eingestellt werden.

Bei einem zeitlich konstanten Eintragen des Reaktionsgemisches in die Form lässt sich, bildlich gesprochen, eine ovalförmige Verteilung eines horizontal auf den Boden einer Form injizierten Reaktionsgemisches erhalten. Hingegen erhält man bei der erfindungsgemäßen zeitlichen Veränderung der Austragsleistung das Reaktionsgemisch in Form eines langgestreckten Streifens.

Das besser vorverteilte, expandierende Reaktionsgemisch hat auf diese Weise kürzere Wege, um die Form auszufüllen. Die Verkürzung der Fließwege führt zu Materialeinsparungen und isotroperen beziehungsweise homogeneren Schaumstrukturen. Mit anderen Worten kann eine gleichmäßigere Rohdichteverteilung im fertigen Schaum erhalten werden. Es werden auch die Festigkeitseigenschaften des Schaums verbessert, da Scherverluste minimiert werden. Es lassen sich Schaumsysteme einsetzen, die auf möglichst kurze Fließwege angewiesen sind. Diese werden auch als "schnelle Systeme" bezeichnet.

Im erfindungsgemäßen Verfahren können Mischköpfe oder Einspritzdüsen zum Eintragen des Reaktionsgemisches in die Form verwendet werden, deren Öffnungsquerschnitt hinsichtlich des Gemischaustrags nicht veränderbar ist.

Vorzugsweise umfasst das schaumbildende Reaktionsgemisch eine Polyolkomponente und eine Polyisocyanatkomponente, so dass ein Polyurethanschaum erhalten wird. Der Schaum kann offenzellig oder geschlossenzellig sein. Es ist weiterhin günstig, wenn das Reaktionsgemisch eine geringe Anfangsviskosität, beispielsweise von ≥ 300 mPas bis ≤ 2000 mPas bei der während des Vermischens herrschenden Temperatur, aufweist.

Bevorzugte Ausführungsformen des erfindungsgemäßen Verfahrens werden nachfolgend geschildert, wobei die Ausführungsformen beliebig miteinander kombiniert werden können, sofern sich aus dem Zusammenhang nicht eindeutig das Gegenteil ergibt.

In einer Ausführungsform des erfindungsgemäßen Verfahrens wird die Leistung des Pumpenmotors verändert, indem mittels eines Frequenzumrichters die Drehzahl des Motors verändert wird. Auf einfache Weise kann dieses durch eine speicherprogrammierbaren Steuerung (SPS) des Motors oder der Motoren realisiert werden.

Im erfindungsgemäßen Verfahren wird das schaumbildende Reaktionsgemisch aus der Reaktion einer ersten und einer zweiten Reaktionskomponente erhalten und die erste und zweite Reaktionskomponente werden jeweils mittels Gleichdruckdüsen in eine Mischkammer eingebracht. Beispiele für geeignete Düsen sind federbelastete Gleichdruckdüsen, pneumatische (Gasfeder) oder hydraulisch geregelte Gleichdruckdüsen. Aus der Mischkammer heraus kann das Reaktionsgemisch dann in die Form eingebracht werden. Der Vorteil dieses Vorgehens liegt in einer gleichbleibenden Vermischungsqualität der beiden Komponenten. Wie bereits zuvor ausgeführt handelt es sich bei den beiden Komponenten insbesondere um ein Polyolsystem und ein Polyisocyanat.

In einer weiteren Ausführungsform des erfindungsgemäßen Verfahrens ist das schaumbildende Reaktionsgemisch derart ausgewählt, dass ein Polyurethan-Hartschaum erhalten wird. Mit eingeschlossen in den Begriff "Polyurethan-Hartschaum" sind Polyurethan/Polyisocyanurat-Hartschäume. Zur Herstellung von Urethan- und/oder Isocyanuratgruppen aufweisenden Hartschaumstoffen können insbesondere als Ausgangskomponenten verwendet werden:
a) Aliphatische, cycloaliphatische, araliphatische, aromatische und heterocyclische Polyisocyanate, bevorzugt Diphenylmethandiisocyanat (MDI) oder Polyphenylpolymethylenpolyisocyanate (polymeres MDI), Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat und
b) Verbindungen mit mindestens zwei gegenüber Isocyanaten reaktiven Wasserstoffatomen mit einem Molekulargewicht im Bereich von 400 g/mol bis 10000 g/mol, zum Beispiel Aminogruppen, Thiolgruppen, Hydroxylgruppen oder Carboxylgruppen aufweisende Verbindungen. Bevorzugt sind hierbei auf Aminogruppen gestartete Polyethylenglykole mit primären Hydroxylgruppen.

Die Herstellung der Schaumstoffe kann unter Verwendung von üblichen Hilfs- und Zusatzstoffen wie Katalysatoren, Treibmitteln, Vernetzern, Flammschutzmitteln Schaumstabilisatoren, Fliessverbesserer und/oder Inhibitoren erfolgen.

Vorzugsweise weist das schaumbildende Reaktionsgemisch eine Abbindezeit von ≥ 15 s bis ≤ 50 s auf. Sie kann auch ≥ 20 s bis ≤ 40 s betragen. Die Abbindezeit ist generell diejenige Zeit, nach der zum Beispiel bei der Polyaddition zwischen Polyol und Polyisocyanat ein theoretisch unendlich ausgedehntes Polymer entstanden ist. Die Abbindezeit lässt sich experimentell dadurch ermitteln, dass in das aufschäumende Reaktionsgemisch in kurzen Abständen ein dünner Holzstab eingetaucht wird. Die Zeit vom Vermischen der Komponenten bis zu dem Zeitpunkt, bei dem am Stab beim Herausziehen Fäden hängenbleiben, ist die Abbindezeit. Die genannten Abbindezeiten haben den Vorteil, dass im Zusammenwirken mit dem erfindungsgemäßen Verfahren Formen schnell und vollständig befüllt werden können.

In einer weiteren Ausführungsform des erfindungsgemäßen Verfahrens beträgt die Zeitdauer, während der das schaumbildende Reaktionsgemisch in zeitlich veränderlicher Menge in die Form eingebracht wird, ≥ 1 s bis ≤ 20 s. Diese Zeitdauer kann auch ≥ 5 s bis ≤ 10 s betragen.

In einer weiteren Ausführungsform des erfindungsgemäßen Verfahrens beträgt in Schritt B) die Austrittsgeschwindigkeit des eingebrachten schaumbildenden Reaktionsgemisches ≥ 0,5 m/s bis ≤ 6 m/s. Vorzugsweise liegt dieser Wert in einem Bereich von ≥ 1 m/s bis ≤ 5 m/s.

Wenn das Reaktionsgemisch aus einem durch einen Auslaufreinigungskolben oder Stößel reinigbaren Mischkopf austritt, wird zweckmäßigerweise die Austrittsgeschwindigkeit aus dem Mischkopf hierbei an dem Stößel gemessen.

In einer weiteren Ausführungsform des erfindungsgemäßen Verfahrens nimmt die Austrittsgeschwindigkeit des eingebrachten schaumbildenden Reaktionsgemisches in Schritt B) im zeitlichen Verlauf ab. Diese Vorgehensweise empfiehlt sich bei langen, schlanken Geometrien der Form, wie sie beispielsweise bei Gehäusen für Dämmelemente von Kühlschränken anzutreffen ist. Auch ist ein abnehmender Eintrag angebracht, wenn das auszufüllende Volumen über die gesamte Bodenfläche der Form gleichmäßig verteilt ist.

In einer weiteren Ausführungsform des erfindungsgemäßen Verfahrens nimmt die Austrittsgeschwindigkeit des eingebrachten schaumbildenden Reaktionsgemisches in Schritt B) im zeitlichen Verlauf zu. Dieses ist bei kurzen, gedrungenen Geometrien der Form vorteilhaft.

In einer weiteren Ausführungsform des erfindungsgemäßen Verfahrens wird vor und/oder nach Schritt B) das schaumbildende Reaktionsgemisch in zeitlich konstanter Austrittsgeschwindigkeit in die Form eingebracht. Auf diese Weise lässt sich eine rampenförmige Mengenverteilung in der Form realisieren. Dieses ist bei großvolumigen Bereichen am Anfang und am Ende der Form vorteilhaft. In einer weiteren Ausführungsform des erfindungsgemäßen Verfahrens wird das schaumbildende Reaktionsgemisch in Schritt B) in horizontaler Richtung in die Form eingebracht. Vorzugsweise wird das Reaktionsgemisch etwa 2 mm bis 50 mm oberhalb des Bodens der Form eingebracht. Beim horizontalen Auftragen kann sich das Reaktionsgemisch besonders gleichmäßig verteilen.

In einer weiteren Ausführungsform des erfindungsgemäßen Verfahrens umfasst die Form im Querschnitt gesehen ein horizontal angeordnetes Bodenvolumen sowie vertikal angeordnete, mit dem Bodenvolumen kommunizierende Volumina. Auf diese Weise lassen sich einstückige Dämmelemente für Kühlschränke herstellen. Beim Befüllen der Form mit dem Reaktionsgemisch verteilt sich dieses zunächst im Bodenvolumen und steigt dann während der Schaumbildung in die vertikalen Volumina auf. Diese Volumina oder Kanäle können ebenfalls eine über die gesamte Länge oder Breite der Form reichende Dimensionierung verfügen. Beispielhafte Dicken liegen zwischen 20 mm und 200 mm, zudem sind eingelegte Leitungen, Kanäle, Paneele und Rohre denkbar, die die Querschnittsdicken verändern können.

In einer weiteren Ausführungsform des erfindungsgemäßen Verfahrens umfasst die Form eine äußere Rohrleitung und eine darin angeordnete innere Rohrleitung und das schaumbildende Reaktionsgemisch wird zwischen innerer und äußerer Rohrleitung eingebracht. Hierdurch lassen sich gedämmte Rohrleitungen erhalten. Die innere Rohrleitung transportiert dabei das gewünschte Material und die äußere Rohrleitung dient als schützende Hülle.

In einer weiteren Ausführungsform des erfindungsgemäßen Verfahrens umfasst die Form zwei voneinander beabstandete Flächenelemente und das schaumbildende Reaktionsgemisch wird zwischen diese Flächenelemente eingebracht. Auf diese Weise können diskontinuierliche Paneele, wie sie zu Isolier- und Brandschutzzwecken benötigt werden, herstellen. Vorzugsweise sind ein oder beide Flächenelemente aus Metall.

Im erfindungsgemäßen Verfahren wird das schaumbildende Reaktionsgemisch über einen Mischkopf mit einer Mischkammer eingebracht und es wird weiterhin der Abflussquerschnitt der Mischkammer während des Einbringens verändert. Dieses kann mittels geeigneter Modifizierungen eines Mischkopfs und Einbinden in ein Steuerungsprogramm realisiert werden.

Auf diese Weise kann die Vermischungsqualität des Reaktionsgemisches bei veränderten Massenströmen gleichbleibend hoch gehalten werden. Bei geringen Massenströmen wird der Abflussquerschnitt geringer gehalten als bei höheren Massenströmen.

Die hierdurch optimal eingestellte Drosselung ermöglicht über die Schusszeit die Ausnutzung der maximalen Austragsbandbreite von Gleichdruckdüsen bei moderater Veränderung des Injektionsdruckes von +/- 15% um einen Mittelwert (150 bar) und gleichbleibend gutem Vermischungsergebnis. Bei Einsatz von Mischköpfen mit mehr als zwei Düsen pro Komponente besteht durch Düsenkombinationen in vielen Fällen die Möglichkeit, die Austragsbandbreite über die gesamte Mischkopfaustragsleistung auf 1:6 beziehungsweise 6:1 zu variieren.

Die vorliegende Erfindung wird anhand der nachfolgenden Zeichnungen weiter erläutert, ohne jedoch darauf beschränkt zu sein. Es zeigen:
- FIG. 1a: das Befüllen einer Form mit einem schaumbildenden Reaktionsgemisch
- FIG. 1b: ein weiteres Befüllen einer Form mit einem schaumbildenden Reaktionsgemisch
- FIG. 2: abstandsabhängige Mengenprofile beim Austragen eines Reaktionsgemisches bei variierender Austrittsgeschwindigkeit auf eine Papierbahn
- FIG.3: einen modifizierten Mischkopf in einer Arbeitsstellung
- FIG.4: einen modifizierten Mischkopf in einer weiteren Arbeitsstellung

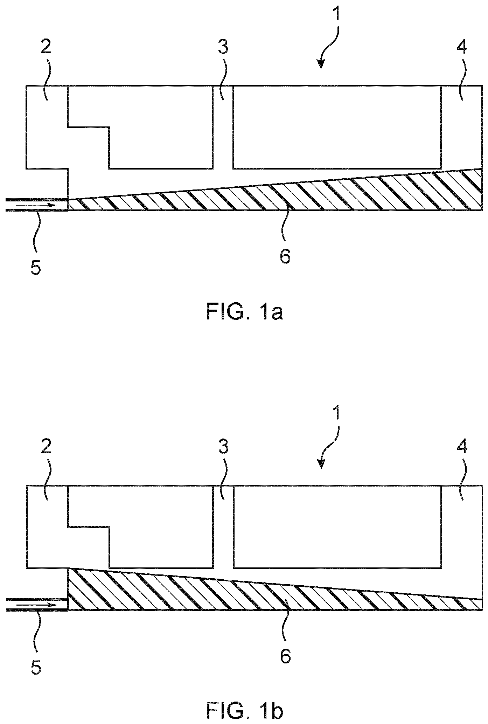

FIG. 1a zeigt schematisch den Zustand kurz nach dem Befüllen einer Form 1 mit einem schaumbildenden Reaktionsgemisch 6. Die Form 1 ist als Hohlkörper ausgeführt und in Querschnittsansicht dargestellt. Bei der Form 1 kann es sich um ein Isolierelement für eine Kombination aus Kühlschrank und Gefriertruhe handeln. So weist die horizontal liegende Form 1 vertikal angeordnete Abschnitte 2, 3 und 4 auf. Der Abschnitt 2 bildet den Bodenabschnitt, Abschnitt 3 trennt Kühlfach und Gefrierfach voneinander und Abschnitt 4 bildet den Kopfabschnitt. Es wird ein horizontal angeordnetes Bodenvolumen gebildet. Die Hohlräume der Abschnitte 2, 3 und 4 bilden vertikal angeordnete, mit dem Bodenvolumen kommunizierende Volumina.

Zum Befüllen der Form wird ein Austragsrohr 5 mit einer entsprechenden Einfüllöffnung der Form 1 verbunden. Aus dem Austragsrohr 5 wird eine schaumbildende Reaktionsmischung 6, die vorzugsweise einen Polyurethanschaum ergibt, eingefüllt. In dem in FIG. la dargestellten Fall wurde das Reaktionsgemisch 6 zunächst in großer Menge pro Zeiteinheit eingefüllt und es wurde danach die Menge kontinuierlich reduziert. Durch den anfänglich hohen Massendurchsatz und somit hohe Austrittgeschwindigkeit des Reaktionsgemisches aus einem nicht näher dargestellten Mischkopf wurde das Reaktionsgemisch 6 in den hinteren Bereich der Form 1 befördert. Ein sukzessives Verringern des Massendurchsatzes beförderte Reaktionsgemisch 6 in den vorderen Teil der Form 1. So wird über die gesamte Länge der Form 1 Reaktionsmischung 6 gleichmäßig aufgetragen.

Auf diese Weise ergibt sich das in FIG. la gezeigte keilförmige Profil der Reaktionsmischung 6, nachdem die Schaumbildung im hinteren Teil der Form 6 bereits eingesetzt hat. Der Hohlraum des Abschnitts 4 der Form 1 wird zuerst mit Schaum ausgefüllt. Bei einem weiteren Einsetzen der Schäumreaktion wird Material in die Hohlräume der Abschnitte 3 und 2 gedrückt. Es kommt in Verbindung mit einer verbesserten vollflächigen Vorverteilung des anfangs noch flüssigen Reaktionsgemisches zu gleichmäßigeren Fließwegdistanzen innerhalb der Form 1. Als Folge davon erhält man eine homogenere Rohdichteverteilung sowie isotropere Zellgeometrien mit verbesserten mechanischen Eigenschaften und Isolationseigenschaften innerhalb des erhaltenen geschäumten Formkörpers.

FIG. 1b zeigt den gegenüber FIG. la umgekehrten Fall des Befüllens der Form 1. Hier wurde die Reaktionsmischung 6 zunächst in geringer Menge pro Zeiteinheit aufgefüllt und danach die Menge erhöht. Auf diese Weise kann zum Beispiel ein in Nähe der Einfüllöffnung gelegenes größeres Volumen, wie es der Hohlraum des Abschnitts 2 darstellt, gut erreicht werden.

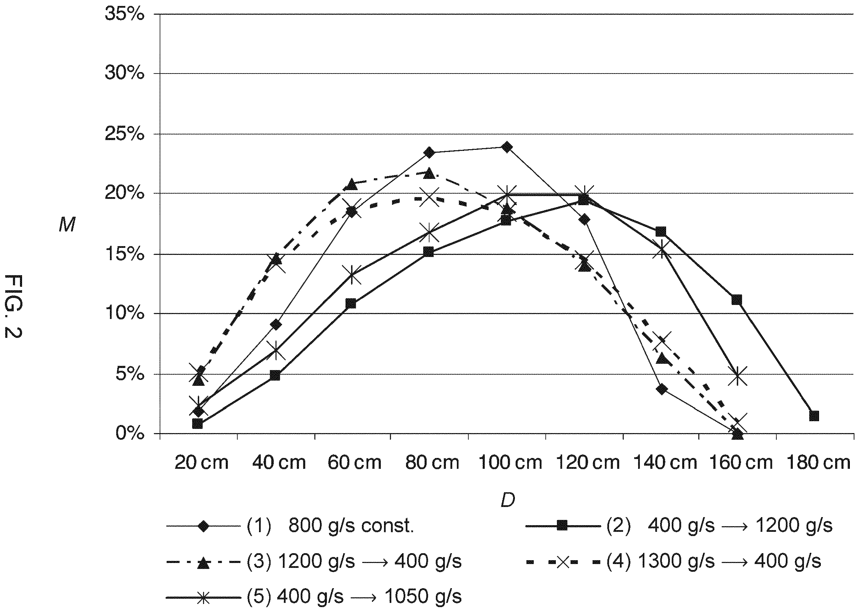

FIG. 2 zeigt Ergebnisse von Vorversuchen, bei denen ein mit flüssigem Treibmittel getriebenes Polyurethan-Hartschaumsystem unter Variation der Austrittsgeschwindigkeit auf eine seitlich nicht begrenzte Papierbahn aufgetragen wurde. Weiterhin ist ein Vergleichsversuch (1) aufgeführt, bei dem die Austragmenge mit 800 g/s zeitlich konstant blieb. Auf der x-Achse ist der Abstand zum Austragsrohr in cm und auf der y-Achse die Menge, ausgedrückt in %, der Gesamtschussmenge des jeweiligen Versuchs angegeben. Die Schussdauer betrug jeweils ca. 8 Sekunden.

In den Versuchen (3) und (4) wurde ausgehend von einer anfänglichen Austragmenge von 1200 beziehungsweise 1300 g/s dieser Wert im Verlauf der Versuche auf 400 g/s reduziert. In den Versuchen (2) und (5) liegt die umgekehrte Situation vor. Ausgehend von einem Wert von 400 g/s wurde bis zu einem Wert von 1200 g/s beziehungsweise 1050 g/s erhöht.

Man erkennt hier, dass beim Vergleichsversuch (1) eine schmalere Mengenverteilung mit einem höheren Maximum auftritt. Die Versuche (2) und (5), bei denen die Austragmenge pro Zeiteinheit erhöht wurde, zeigen ein zu größeren Abständen zum Austragsrohr verschobenes Maximum und eine breitere Mengenverteilung. Bei den Versuchen (3) und (4), in denen die Austragmenge pro Zeiteinheit verringert wurde, ist ein zu geringeren Abständen verschobenes Maximum und ebenfalls eine breitere Mengenverteilung zu beobachten.

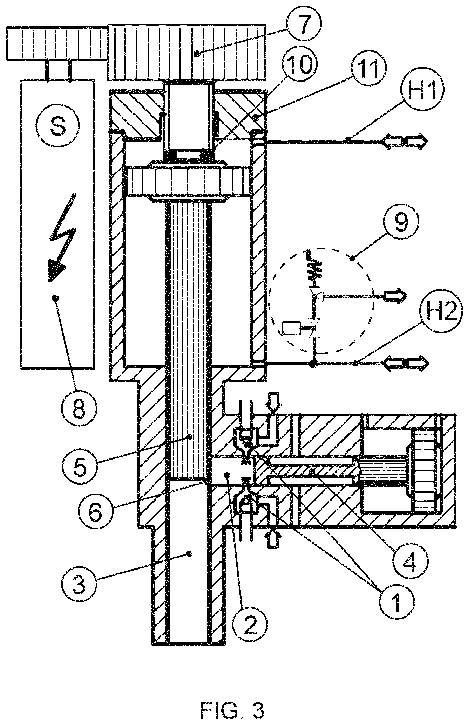

FIG. 3 zeigt einen modifizierten Mischkopf zum Einsatz in einer Ausführungsform des erfindungsgemäßen Verfahrens. Im vorliegenden Fall ist er als Umlenkermischkopf konzipiert. Nach Verlassen der Düsen 1 vermischen sich die Reaktionskomponenten über kinetische Energie in der zylindrischen Mischkammer 2, strömen anschließend über eine 90°-Umlenkung in ein Auslaufrohr 3, dessen Querschnittsfläche sich deutlich vergrößert und dadurch eine Fließberuhigung des Gemischstroms erzeugt.

Nach Beendigung des Gemischaustrags werden die Komponentenströme über Nuten im Steuerkolben 4 in eine Kreislaufstellung geschaltet. Gleichzeitig werden über den Steuerkolben Gemischreste aus der Mischkammer in das Auslaufrohr ausgetragen. Im Anschluss erfolgt die Reinigung des Auslaufrohres über einen weiteren Stößel 5. Die Schaltvorgänge werden über schematisch eingezeichnete Hydrauliken "H1" und "H2" mit Drücken von etwa 100 bis 160 bar bewerkstelligt, um schnelle, aber auch kraftvolle Schaltbewegungen realisieren zu können.

Neben der Reinigungsfunktion dient der Reinigungsstößel 5 auch als Drosselelement. Üblicherweise wird durch eine manuell über Feingewinde verstellbare Hubbegrenzung der Verfahrweg des Stößels 5 auf Anschlag derart begrenzt, dass das in Strömungsrichtung untere Stößelende eine Überdeckung des Übergangs zwischen Mischkammer 2 und Auslaufrohr 3 erzeugt. Je nach Überdeckungsgrad verändert sich der freie Abflussquerschnitt 6, wodurch das Mischkammerdruckniveau wie auch die Mischqualität beeinflusst wird.

In der hier gezeigten Arbeitsstellung ist der Gemischaustrag stark gedrosselt.

Im vorliegenden modifizierten Mischkopf wird die manuelle Handverstellung demontiert und durch ein Zahnradpaar 7 ersetzt. Am Mischkopfgehäuse erfolgt die Befestigung eines Servomotors "S" 8, der über das Zahnradpaar mit der Hubbegrenzung formschlüssig verbunden und in die Anlagensteuerung integriert wird.

Zwecks Reduzierung der auf das Verstellgewinde wirkenden Klemm- und Reibwiderstände wird der hydraulische Schaltdruck des Reinigungsstößels 5 während der Gemischaustrittsphase über eine Bypassschaltung 9 auf < 10 bar abgesenkt und die Kontaktfläche zwischen Hubanschlag und Hydraulikkolben wird durch ein Axialkugellager 10 gegen Momentübertragungen entkoppelt. Somit dient der hydraulische Druck je nach Bewegungsrichtung nur noch der Nachführung des Hydraulikkolbens gegen die veränderbare Hubbegrenzung beziehungsweise der Positionsfixierung gegen die Anschlagfläche.

Nach Beendigung des Gemischaustritts verfährt der Servomotor 8 die Hubbegrenzung in die obere Endlage, wobei das Axialkugellager 10 in die nach oben begrenzende Zylinderplatte 11 eintaucht. In dieser Position schließt das Bypassventil und der Reinigungsstößel 5 kann mit üblichem Hydraulikdruck geschaltet werden.

Durch die Verwendung eines Servomotors wird eine hochpräzise und reproduzierbare Drosselstellung realisiert, die abhängig vom Gemischaustrag über die Gemischaustragszeit angepasst werden kann.

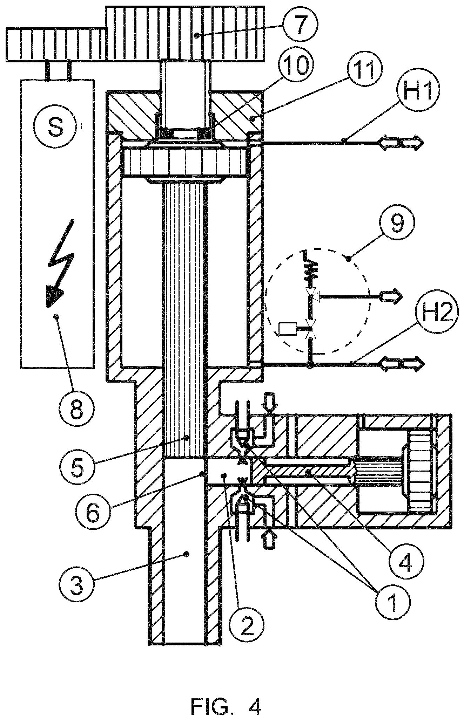

FIG. 4 zeigt einen modifizierten Mischkopf analog zu dem in FIG. 3 gezeigten, wobei jedoch aufgrund der unterschiedlichen Position des Stößels 5 der freie Abflussquerschnitt 6 vergrößert ist. Im Ergebnis ist der Gemischaustrag ungedrosselt.

### Beispiele

Es wurden Versuche bei Dämmelementen für Kühl-Gefrierschrank-Kombinationen durchgeführt. Bei diesen Versuchen wurde untersucht, mit welchen Verfahren die für eine homogene Ausschäumung der Form benötigte Menge an schaumbildendem Reaktionsgemisch möglichst gering gehalten werden kann. Es wurde ein mit einem flüssigen Treibmittel getriebenes Polyurethan-Hartschaumsystem eingesetzt und die Ergebnisse durch technisch geschultes Personal optisch begutachtet. Es wurde jeweils die gleiche auszuschäumende Form eingesetzt.

### Beispiel 1 (erfindungsgemäß)

In Beispiel 1 wurde die Form anfänglich mit 1200 g/s in abnehmender Menge pro Zeiteinheit bis zu einem Endwert von 400 g/s mit Reaktionsgemisch befüllt. Die Abnahme des Massendurchsatzes erfolgte im Rahmen der praktischen Möglichkeiten linear. Insgesamt wurden 4940 g Reaktionsmischung eingetragen. Die Form wurde vollständig ausgeschäumt. Insbesondere waren auch die oberen Kanten scharf ausgebildet.

### Beispiel 2 (Vergleich)

Hier wurde die Form bei einer konstanten Menge von 800 g/s ebenfalls mit 4940 g Reaktionsmischung befüllt. Nach Beendigung des Ausschäumvorgangs wurde festgestellt, dass am oberen Ende des Dämmelements Material fehlte, welches auf eine unvollständige Ausschäumung zurückzuführen ist.

## Patentansprüche

1. Verfahren zur Herstellung von geschäumten Formkörpern, umfassend die Schritte:
A) Bereitstellen einer Form und
B) Einbringen eines schaumbildenden Reaktionsgemisches in die Form,
wobei in Schritt B) das schaumbildende Reaktionsgemisch unter konstantem Injektionsdruck und zeitlich veränderlicher Menge in die Form eingebracht wird,
wobei das schaumbildende Reaktionsgemisch aus der Reaktion einer ersten und einer zweiten Reaktionskomponente erhalten wird und die erste und zweite Reaktionskomponente jeweils mittels Gleichdruckdüsen (1) in eine vergleichsweise kleine im Mischkopf liegende Mischkammer (2) eingebracht werden und
wobei die zeitliche Änderung der Eintragsmenge des schaumbildenden Reaktionsgemisches durch eine Veränderung der Leistung eines auf das Reaktionsgemisch einwirkenden Pumpenmotors erfolgt und
wobei das schaumbildende Reaktionsgemisch aus der Vermischung der ersten und der zweiten Reaktionskomponente in der im Mischkopf liegenden Mischkammer (2) erhalten wird und die im Mischkopf liegende Mischkammer (2) eine oder mehrere Gleichdruckdüsen (1) umfasst, und
wobei der konstant gehaltene Druck im Verfahren der an den Gleichdruckdüsen (1) angelegte Druck ist.

2. Verfahren gemäß Anspruch 1, wobei die Leistung des Pumpenmotors verändert wird, indem mittels eines Frequenzumrichters die Drehzahl des Motors verändert wird.

3. Verfahren gemäß Anspruch 1, wobei das schaumbildende Reaktionsgemisch derart ausgewählt ist, dass ein Polyurethan-Hartschaum erhalten wird.

4. Verfahren gemäß Anspruch 3, wobei das schaumbildende Reaktionsgemisch eine Abbindezeit von ≥ 15 s bis ≤ 50 s aufweist.

5. Verfahren gemäß Anspruch 1, wobei die Zeitdauer, während der das schaumbildende Reaktionsgemisch in zeitlich veränderlicher Menge in die Form eingebracht wird, ≥ 1 s bis ≤ 20 s beträgt.

6. Verfahren gemäß Anspruch 1, wobei in Schritt B) die Austrittsgeschwindigkeit des eingebrachten schaumbildenden Reaktionsgemisches ≥ 0,5 m/s bis ≤ 6 m/s beträgt.

7. Verfahren gemäß Anspruch 1, wobei die Austrittsgeschwindigkeit des eingebrachten schaumbildenden Reaktionsgemisches in Schritt B) im zeitlichen Verlauf abnimmt.

8. Verfahren gemäß Anspruch 1, wobei die Austrittsgeschwindigkeit des eingebrachten schaumbildenden Reaktionsgemisches in Schritt B) im zeitlichen Verlauf zunimmt.

9. Verfahren gemäß Anspruch 1, wobei vor und/oder nach Schritt B) das schaumbildende Reaktionsgemisch in zeitlich konstanter Austrittsgeschwindigkeit in die Form eingebracht wird.

10. Verfahren gemäß Anspruch 1, wobei das schaumbildende Reaktionsgemisch in Schritt B) in horizontaler Richtung in die Form eingebracht wird.

11. Verfahren gemäß Anspruch 1, wobei die Form im Querschnitt gesehen ein horizontal angeordnetes Bodenvolumen sowie vertikal angeordnete, mit dem Bodenvolumen kommunizierende Volumina umfasst

12. Verfahren gemäß Anspruch 1, wobei die Form eine äußere Rohrleitung und eine darin angeordnete innere Rohrleitung umfasst und das schaumbildende Reaktionsgemisch zwischen innerer und äußerer Rohrleitung eingebracht wird.

13. Verfahren gemäß Anspruch 1, wobei die Form zwei voneinander beabstandete Flächenelemente umfasst und das schaumbildende Reaktionsgemisch zwischen diese Flächenelemente eingebracht wird.

14. Verfahren gemäß Anspruch 1, wobei das schaumbildende Reaktionsgemisch über einen Mischkopf mit einer Mischkammer (2) eingebracht wird und wobei weiterhin der Abflussquerschnitt (6) der Mischkammer (2) während des Einbringens verändert wird.

## Claims

1. Process for the production of foamed mouldings, comprising the following steps:
A) provision of a mould and
B) introduction of a foam-forming reaction mixture into the mould,
where
in step B) a chronologically changing quantity of the foam-forming reaction mixture is introduced under constant injection pressure into the mould,
where the foam-forming reaction mixture is obtained from the reaction of a first and a second reaction component, and the first and second reaction component are respectively introduced by means of constant-pressure nozzles (1) into a comparatively small mixing chamber (2) situated in the mixing head, and
where the chronological change of the input quantity of the foam-forming reaction mixture is achieved via change of the performance of a pump motor acting on the reaction mixture, and
where the foam-forming reaction mixture from the mixing of the first and the second reaction component is obtained in the mixing chamber (2) situated in the mixing head, and the mixing chamber (2) situated in the mixing head comprises one or more constant-pressure nozzles (1), and
where the constant pressure maintained in the process is the pressure applied at the constant-pressure nozzles (1).

2. Process according to Claim 1, where the performance of the pump motor is changed by using a frequency converter to change the rotation rate of the motor.

3. Process according to Claim 1, where the selection of the foam-forming reaction mixture is such that a rigid polyurethane foam is obtained.

4. Process according to Claim 3, where the fibre time of the foam-forming reaction mixture is ≥ 15 s to ≤ 50 s.

5. Process according to Claim 1, where the period during which a chronologically changing quantity of the foam-forming reaction mixture is introduced into the mould is ≥ 1 s to ≤ 20 s.

6. Process according to Claim 1, where, in step B), the discharge velocity of the foam-forming reaction mixture introduced is ≥ 0.5 m/s to ≤ 6 m/s.

7. Process according to Claim 1, where discharge velocity of the foam-forming reaction mixture introduced in step B) decreases over time.

8. Process according to Claim 1, where discharge velocity of the foam-forming reaction mixture introduced in step B) increases over time.

9. Process according to Claim 1, where, before and/or after step B), the foam-forming reaction mixture is introduced into the mould at chronologically constant discharge velocity.

10. Process according to Claim 1, where, in step B), the foam-forming reaction mixture is introduced in horizontal direction into the mould.

11. Process according to Claim 1, where the mould, when viewed in cross section, comprises a horizontally arranged basal volume and vertically arranged volumes communicating with the basal volume.

12. Process according to Claim 1, where the mould comprises an exterior pipe and an interior pipe arranged therein, and the foam-forming reaction mixture is introduced between interior and exterior pipe.

13. Process according to Claim 1, where the mould comprises two elements having substantial surface area and separated from one another, and the foam-forming reaction mixture is introduced between these elements.

14. Process according to Claim 1, where the foam-forming reaction mixture is introduced by way of a mixing head with a mixing chamber (2), and where moreover the outgoing flow cross section (6) of the mixing chamber (2) is changed during introduction.

## Revendications

1. Procédé de fabrication de corps moulés moussés, comprenant les étapes suivantes :
A) la préparation d'un moule et
B) l'introduction d'un mélange réactionnel formant une mousse dans le moule,
à l'étape B), le mélange réactionnel formant une mousse étant introduit dans le moule sous une pression d'injection constante et en une quantité modifiable dans le temps,
le mélange réactionnel formant une mousse étant obtenu par la réaction d'un premier et d'un deuxième composant réactionnel, et le premier et le deuxième composant réactionnel étant chacun introduits au moyen de buses à pression égale (1) dans une chambre de mélange (2) relativement petite située dans la tête de mélange, et la modification temporelle de la quantité d'entrée du mélange réactionnel formant une mousse ayant lieu par une modification de la puissance d'un moteur de pompe agissant sur le mélange réactionnel, et
le mélange réactionnel formant une mousse étant obtenu par le mélange du premier et du deuxième composant réactionnel dans la chambre de mélange (2) située dans la tête de mélange, et la chambre de mélange (2) située dans la tête de mélange comprenant une ou plusieurs buses à pression égale (1), et
la pression maintenue constante dans le procédé étant la pression appliquée sur les buses à pression égale (1).

2. Procédé selon la revendication 1, dans lequel la puissance du moteur de pompe est modifiée par modification de la vitesse de rotation du moteur au moyen d'un convertisseur de fréquence.

3. Procédé selon la revendication 1, dans lequel le mélange réactionnel formant une mousse est choisi de telle sorte qu'une mousse dure de polyuréthane soit obtenue.

4. Procédé selon la revendication 3, dans lequel le mélange réactionnel formant une mousse présente un temps de prise de ≥ 15 s à ≤ 50 s.

5. Procédé selon la revendication 1, dans lequel la durée pendant laquelle le mélange réactionnel formant une mousse est introduit dans le moule en une quantité modifiable dans le temps est de ≥ 1 s à ≤ 20 s.

6. Procédé selon la revendication 1, dans lequel, à l'étape B), la vitesse de sortie du mélange réactionnel formant une mousse introduit est de ≥ 0,5 m/s à ≤ 6 m/s.

7. Procédé selon la revendication 1, dans lequel la vitesse de sortie du mélange réactionnel formant une mousse introduit à l'étape B) diminue en fonction du temps.

8. Procédé selon la revendication 1, dans lequel la vitesse de sortie du mélange réactionnel formant une mousse introduit à l'étape B) augmente en fonction du temps.

9. Procédé selon la revendication 1, dans lequel, avant et/ou après l'étape B), le mélange réactionnel formant une mousse est introduit dans le moule à une vitesse de sortie constante dans le temps.

10. Procédé selon la revendication 1, dans lequel le mélange réactionnel formant une mousse est introduit dans le moule à l'étape B) dans la direction horizontale.

11. Procédé selon la revendication 1, dans lequel le moule comprend, observé dans la section transversale, un volume de fond agencé horizontalement, ainsi que des volumes agencés verticalement, communiquant avec le volume de fond.

12. Procédé selon la revendication 1, dans lequel le moule comprend une conduite extérieure et une conduite intérieure agencée à l'intérieur de celle-ci, et le mélange réactionnel formant une mousse est introduit entre la conduite intérieure et la conduite extérieure.

13. Procédé selon la revendication 1, dans lequel le moule comprend deux éléments plats espacés l'un de l'autre et le mélange réactionnel formant une mousse est introduit entre ces éléments plats.

14. Procédé selon la revendication 1, dans lequel le mélange réactionnel formant une mousse est introduit par le biais d'une tête de mélange comprenant une chambre de mélange (2) et dans lequel la section transversale d'écoulement (6) de la chambre de mélange (2) est en outre modifiée pendant l'introduction.
